(19) Europäisches Patentamt / European Patent Office / Office européen des brevets

(11) **EP 4 340 057 A1**

(12) **EUROPEAN PATENT APPLICATION**
published in accordance with Art. 153(4) EPC

(43) Date of publication:
**20.03.2024 Bulletin 2024/12**

(21) Application number: **22904709.7**

(22) Date of filing: **09.12.2022**

(51) International Patent Classification (IPC):
$H01M\ 4/131^{(2010.01)}$    $H01M\ 4/136^{(2010.01)}$
$H01M\ 4/36^{(2006.01)}$    $H01M\ 4/38^{(2006.01)}$
$H01M\ 4/58^{(2010.01)}$    $H01M\ 4/62^{(2006.01)}$
$H01M\ 4/587^{(2010.01)}$    $H01M\ 10/052^{(2010.01)}$

(52) Cooperative Patent Classification (CPC):
H01M 4/02; H01M 4/131; H01M 4/134;
H01M 4/136; H01M 4/1395; H01M 4/36;
H01M 4/38; H01M 4/48; H01M 4/58; H01M 4/587;
H01M 4/62; H01M 10/052; Y02E 60/10

(86) International application number:
**PCT/KR2022/020017**

(87) International publication number:
**WO 2023/106880 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.12.2021 KR 20210176771**

(71) Applicant: **LG Energy Solution, Ltd.**
**Seoul 07335 (KR)**

(72) Inventors:
 • **OH, Ilgeun**
 **Daejeon 34122 (KR)**

 • **SHIN, Sun Young**
 **Daejeon 34122 (KR)**
 • **LEE, Yong Ju**
 **Daejeon 34122 (KR)**
 • **CHOI, Junghyun**
 **Daejeon 34122 (KR)**
 • **PARK, Semi**
 **Daejeon 34122 (KR)**
 • **PARK, Heeyeon**
 **Daejeon 34122 (KR)**

(74) Representative: **Hoffmann Eitle**
**Patent- und Rechtsanwälte PartmbB**
**Arabellastraße 30**
**81925 München (DE)**

(54) **ANODE, MANUFACTURING METHOD FOR ANODE, ANODE SLURRY, AND SECONDARY BATTERY INCLUDING ANODE**

(57) Disclosed are a negative electrode, a method of manufacturing a negative electrode, a negative electrode slurry, and a secondary battery including a negative electrode.

EP 4 340 057 A1

**Description**

[Technical Field]

This application claims priority to and the benefit of Korean Patent Application No. 10-2021-0176771 filed with the Korean Intellectual Property Office on December 10, 2021, the entire contents of which are incorporated herein by reference.

The present invention relates to a negative electrode, a method of manufacturing a negative electrode, a negative electrode slurry, and a secondary battery including a negative electrode.

[Background Art]

Recently, with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolyte solution, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.

On the other hand, among the silicon-based active materials, a silicon-based oxide, specifically, a silicon-based oxide represented by $SiO_x$ ($0<x<2$) has an advantage in that the degree of volume expansion/contraction during the charging and discharging is lower as compared with other silicon-based active materials such as silicon (Si). However, the silicon-based oxide still has a disadvantage in that the initial efficiency is lowered due to the presence of irreversible capacity.

In this regard, studies have been conducted to reduce the irreversible capacity and to improve the initial efficiency by doping or intercalating metals such as Li, Al, and Mg into silicon-based oxides. However, a negative electrode slurry including a metal-doped silicon-based oxide as a negative electrode active material has a problem in that the metal oxide formed by doping metal reacts with moisture to increase pH of the negative electrode slurry and to change the viscosity. Accordingly, the state of the manufactured negative electrode is poor and the charge/discharge efficiency of the negative electrode is lowered.

Accordingly, there is a need to develop a technology capable of improving phase stability of a negative electrode slurry including a silicon-based oxide and improving charge/discharge efficiency of a negative electrode manufactured from the slurry.

CITATION LIST

(Patent Literature 1) Korean Patent Application Publication No. 10-2017-0048211

[Detailed Description of the Invention]

[Technical Problem]

The present invention relates to a negative electrode, a method of manufacturing a negative electrode, a negative electrode slurry, and a secondary battery including a negative electrode.

[Technical Solution]

An exemplary embodiment of the present invention provides a negative electrode including a negative electrode current collector; and a negative electrode active material layer provided on the negative electrode current collector, in which the negative electrode active material layer includes a silicon-based active material, in which the silicon-based active material includes silicon-based particles including $SiO_x$ (0<x<2) and Li, in which the negative electrode includes 0.05 part by weight or more and 1.5 parts by weight or less of one or more elements selected from the group consisting of aluminum, boron, zinc and zirconium elements, on the basis of 100 parts by weight of a total of the negative electrode active material layer, and in which the negative electrode includes a structure where the one or more elements selected from the group consisting of aluminum, boron, zinc and zirconium elements are bound to oxygen.

Another exemplary embodiment of the present invention provides a method of manufacturing a negative electrode, the method including a step of forming a negative electrode slurry by mixing a silicon-based active material including silicon-based particles including $SiO_x$ (0<x<2) and Li, a conductive material, a binder and an acid; and a step of forming a negative electrode active material layer by applying the negative electrode slurry to at least one surface of a negative electrode current collector, in which the acid is an acid including one or more elements selected from the group consisting of aluminum, boron, zinc and zirconium elements.

Still another exemplary embodiment of the present invention provides a secondary battery including the negative electrode.

Yet another exemplary embodiment of the present invention provides a negative electrode slurry including a silicon-based active material, in which the silicon-based active material includes silicon-based particles including $SiO_x$ (0<x<2) and Li, in which the negative electrode slurry includes 0.05 part by weight or more and 1.5 parts by weight or less of one or more elements selected from the group consisting of aluminum, boron, zinc and zirconium elements, on the basis of 100 parts by weight of a total of a solid content of the negative electrode slurry, and in which the negative electrode slurry includes a structure where the one or more elements selected from the group consisting of aluminum, boron, zinc and zirconium elements are bound to oxygen.

[Advantageous Effects]

The negative electrode according to an exemplary embodiment of the present invention includes a certain amount of Al, B, Zn, or Zr element in the negative electrode by adding an acid including Al, B, Zn, or Zr in a process of manufacturing the negative electrode slurry, and includes a structure where the elements are bound to oxygen. Specifically, when the above-described acid is added in the process of manufacturing the negative electrode slurry, the base (OH⁻) in the negative electrode slurry preferentially reacts with acid before reacting with Si of the active material, and OH on the Si surface reacts with the acid, which can hinder access of base to Si.

Therefore, the rheological properties of the negative electrode slurry and gas generation are suppressed to reduce a change in viscosity of the slurry. In addition, since the added acid reacts with the base, there is no damage to other materials such as CMC (carboxy methyl cellulose) binder due to acidity. Therefore, when the negative electrode is applied to a secondary battery, it is possible to improve the discharge capacity, initial efficiency, resistance performance and/or lifespan characteristics of the battery.

[Best Mode]

Hereinafter, the present specification will be described in more detail.

In the present specification, unless explicitly described to the contrary, the word "comprise", "includes" and "have" and variations thereof will be understood to imply the inclusion of stated elements but not the exclusion of any other elements.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the negative electrode or the materials included in the negative electrode can be confirmed through X-ray diffraction analysis, and the X-ray diffraction analysis may be performed using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the negative electrode can be confirmed through ICP analysis, and the ICP analysis may be performed using an inductively coupled plasma atomic emission spectrometer (ICPAES, Perkin-Elmer 7300) .

In the present specification, the average particle diameter ($D_{50}$) may be defined as a particle diameter corresponding to 50% of the cumulative volume in the particle size distribution curve of the particles (graph curve of the particle size distribution). The average particle diameter ($D_{50}$) may be measured using, for example, a laser diffraction method. In the laser diffraction method, in general, particle diameters ranging from a submicron range to several millimeters can be measured, and results with high reproducibility and high resolvability can be obtained.

Hereinafter, preferred embodiments of the present invention will be described in detail. However, it should be understood that the exemplary embodiments of the present invention may be modified in various forms and the scope of the present invention is not limited to the exemplary embodiments described below.

An exemplary embodiment of the present invention provides a negative electrode including a negative electrode current collector; and a negative electrode active material layer provided on the negative electrode current collector, in which the negative electrode active material layer includes a silicon-based active material, in which the silicon-based active material includes silicon-based particles including $SiO_x$ (0<x<2) and Li, in which the negative electrode includes 0.05 part by weight or more and 1.5 parts by weight or less of one or more elements selected from the group consisting of aluminum, boron, zinc and zirconium elements, on the basis of 100 parts by weight of a total of the negative electrode active material layer, and in which the negative electrode includes a structure where the one or more elements selected from the group consisting of aluminum, boron, zinc and zirconium elements are bound to oxygen.

In general, when manufacturing a silicon-based oxide by doping Li into silicon-based particles, a method of coating carbon on the silicon-based particles and then doping the coated silicon-based particles by heat-treating lithium powders is used. In this case, there is an advantage of increasing the initial efficiency, but damage to the carbon layer occurs due to lithium doping after carbon coating, and lithium by-products that do not react with the silicon-based particles remain. Therefore, during the manufacturing of the aqueous slurry, the slurry becomes basic due to the lithium by-products remaining unreacted with the silicon-based particles (silicon-based oxide), and Si of the silicon-based active material and the base ($OH^-$) of the slurry react to generate a gas and to change rheological properties.

In order to solve this problem, the present invention provides a negative electrode manufactured by adding an acid including Al, B, Zn or Zr in a process of manufacturing a negative electrode slurry. Specifically, in the slurry manufacturing process, the above-mentioned acid is added so that the base in the slurry preferentially reacts with the acid before reacting with Si of the silicon-based active material and the OH on the Si surface reacts with the acid to prevent access of the base to Si. Therefore, the reaction between Si and the base in the slurry is suppressed, so that the rheological properties of the slurry and the gas generation are suppressed and the change in viscosity of the slurry is reduced. In addition, since the added acid reacts with the base, there is no damage to other materials such as CMC (carboxy methyl cellulose) binder due to acidity.

Accordingly, a secondary battery including the negative electrode has effects of improving the discharge capacity, initial efficiency, resistance performance and/or lifespan characteristics of the battery.

In the exemplary embodiment of the present invention, the negative electrode includes 0.05 part by weight or more and 1.5 parts by weight or less of one or more elements selected from the group consisting of aluminum, boron, zinc and zirconium elements, on the basis of 100 parts by weight of a total of the negative electrode active material layer.

Specifically, the negative electrode includes 0.05 part by weight or more and 1.3 parts by weight or less, 0.08 part by weight or more and 1.2 parts by weight or less, more specifically, 0.1 part by weight or more and 1 part by weight or less of one or more elements selected from the group consisting of aluminum, boron, zinc and zirconium elements, on the basis of 100 parts by weight of a total of the negative electrode active material layer. The lower limit of the content may be 0.05 part by weight, 0.06 part by weight, 0.07 part by weight, 0.08 part by weight, 0.09 part by weight, 0.1 part by weight or 0.15 part by weight, and the upper limit may be 1.5 parts by weight, 1.3 parts by weight, 1.2 parts by weight, 1.1 parts by weight or 1 part by weight.

When the above range is satisfied, the rheological properties of the negative electrode slurry and the gas generation are appropriately suppressed to form a stable negative electrode, and the secondary battery including the negative electrode has effects of improving the discharge capacity, initial efficiency, resistance performance and/or life characteristics of the battery. On the other hand, if the content of the element is less than the above range, there are problems in that sufficient acid capable of reacting with the base is not provided, and gas is generated during slurry manufacturing to degrade the performance of the negative electrode. If the content of the element is greater than the above range, there are problems in that the capacity of the negative electrode decreases and the element acts as a resistor that hinders the diffusion of lithium ions.

The contents of aluminum, boron, zinc, and zirconium elements included in the negative electrode can be confirmed through ICP analysis, and the ICP analysis may be performed using an inductively coupled plasma atomic emission spectrometer (ICPAES, Perkin-Elmer 7300).

One or more elements selected from the group consisting of aluminum, boron, zinc, and zirconium elements may be included in the negative electrode active material layer.

In the exemplary embodiment of the present invention, the negative electrode includes a structure where the one or more elements selected from the group consisting of aluminum, boron, zinc, and zirconium elements are bound to oxygen.

The structure where the one or more elements selected from the group consisting of aluminum, boron, zinc, and zirconium elements are bound to oxygen may be a hydroxide containing one or more elements selected from the group consisting of aluminum, boron, zinc, and zirconium elements.

The structure where the one or more elements selected from the group consisting of aluminum, boron, zinc, and zirconium elements are bound to oxygen may be a lithium aluminum compound, a lithium boron compound, a lithium zinc compound, or a lithium zirconium compound.

In the exemplary embodiment of the present invention, the negative electrode may include a structure (Al-O) where aluminum is bound to oxygen. Specifically, the aluminum may be present in the negative electrode in a form of a compound having an Al-O bond as a result of an aluminum-containing acid added in the slurry reacting with a base (OH$^-$) or reacting with an OH group on a Si surface or in a form of a compound containing Li and Al. For example, the aluminum may be present in a form of $Al(OH)_3$, $LiAl_2(OH)_7 \cdot 2H_2O$ or the like.

In the exemplary embodiment of the present invention, the negative electrode may include a structure (B-O) where boron is bound to oxygen. Specifically, the boron may be present in the negative electrode in a form of a compound having a B-O bond as a result of a boron-containing acid added in a slurry reacting with a base (OH$^-$) or reacting with an OH group on a Si surface or in a form of a compound containing B and O. For example, the boron may be present in a form of $B(OH)_3$, $B(OLi)_3$, $B_2O_3$ or the like.

In the exemplary embodiment of the present invention, the negative electrode may include a structure (Zn-O) where zinc is bound to oxygen. Specifically, the zinc may be present in the negative electrode in a form of a compound having a Zn-O bond as a result of a zinc-containing acid added in a slurry reacting with a base (OH$^-$) or reacting with an OH group on a Si surface. For example, the zinc may be present in a form of $Zn(OH)_2$ or the like.

In the exemplary embodiment of the present invention, the negative electrode may include a structure (Zr-O) where zirconium is bound to oxygen. Specifically, the zirconium may be present in the negative electrode in a form of a compound having a Zr-O bond as a result of a zirconium-containing acid added in a slurry reacting with a base (OH$^-$) or reacting with an OH group on a Si surface. For example, the zirconium may be present in a form of $ZrO(OH)_2$ or the like.

The aluminum, boron, zinc, and zirconium may be included in the negative electrode active material layer. In one example, the aluminum, boron, zinc, and zirconium may be included in a region outside the negative electrode active material distributed in the negative electrode active material layer.

The Al-O, B-O, Zn-O and Zr-O bonds can be confirmed through XPS (Nexsa ESCA System, Thermo Fisher Scientific (NEXSA 1)) analysis.

In the exemplary embodiment of the present invention, the negative electrode includes an aluminum element, and a peak appears in a range of 74 eV to 75.5 eV (binding energy) during XPS analysis.

In the exemplary embodiment of the present invention, when the negative electrode includes a boron element, a peak appears in a range of 192 eV to 194 eV (binding energy) during XPS analysis.

In the exemplary embodiment of the present invention, the negative electrode includes a zinc elemental, and a peak appears in a range of 1022 eV to 1024 eV (binding energy) during XPS analysis.

In the exemplary embodiment of the present invention, the negative electrode includes a zirconium element, and a peak appears in a range of 182 eV to 184 eV (binding energy) during XPS analysis.

The binding energy range means a binding energy range of each element and oxygen. That is, when a peak is detected in the above range, it means that a structure where each element is bound to oxygen is included.

In the exemplary embodiment of the present invention, the negative electrode may include a hydroxide containing one or more elements selected from the group consisting of aluminum, boron, zinc, and zirconium elements. For example, the negative electrode may include $Al(OH)_3$, $B(OH)_3$, $Zn(OH)_2$, $ZrO(OH)_2$ or the like.

In the exemplary embodiment of the present invention, the negative electrode may include one or more selected from the group consisting of a lithium aluminum compound, a lithium boron compound, a lithium zinc compound, and a lithium zirconium compound. Specifically, the lithium aluminum compound, the lithium boron compound, the lithium zinc compound, and the lithium zirconium compound may be present in an oxide or hydroxide form, and may be formed as a result of a hydroxide containing one or more selected from the group consisting of aluminum, boron, zinc, and zirconium elements reacting with OH$^-$ or lithium by-products in the slurry. For example, the lithium aluminum compound and the lithium boron compound may be each present in a form of $LiAl_2(OH)_7 \cdot 2H_2O$, $B(OLi)_3$, and the like.

A silicon-based active material according to the exemplary embodiment of the present invention includes silicon-based particles including $SiO_x (0 < x < 2)$ and Li.

The SiOx ($0 < x < 2$) corresponds to a matrix within the silicon-based particle. The $SiO_x (0 < x < 2)$ may be a form of including Si and $SiO_2$, and the Si may form a phase. That is, x corresponds to a ratio of the number of O to Si included in the $SiO_x (0 < x < 2)$. When the silicon-based particle includes the $SiO_x (0 < x < 2)$, a discharge capacity of a secondary battery can be improved.

The silicon-based particle includes Li. The Li may be present in a form of at least one of a lithium atom, lithium silicate, lithium silicide, or a lithium oxide in the silicon-based particles, and preferably, may be present in the form of lithium silicate. When the Li is present in the form of a Li compound, the Li compound may correspond to a matrix within the silicon-based particle. When the silicon-based particle include Li, the initial efficiency is improved.

The Li may be included in the silicon-based particles through steps of heating and vaporizing mixed powders of Si and $SiO_2$, depositing the vaporized mixed gas to form SiO, and mixing and heat-treating the formed SiO and Li powders.

That is, the Li may be distributed on the surface and/or in the inside of the silicon-based particles in a form of being doped to the silicon-based particles. The Li may be distributed on the surface and/or in the inside of the silicon-based particles to control volume expansion/contraction of the silicon-based particles to an appropriate level and to prevent damage to the active material. In addition, the Li may be contained, in terms of lowering a ratio of an irreversible phase (for example, $SiO_2$) of silicon-based oxide particles to increase the efficiency of the active material.

In the exemplary embodiment of the present invention, Li may be present in a form of lithium silicate. The lithium silicate is represented by $Li_aSi_bO_c$ ($2 \leq a \leq 4$, $0 < b \leq 2$, $2 \leq c \leq 5$) and may be divided into crystalline lithium silicate and amorphous lithium silicate. The crystalline lithium silicate may be present in the silicon-based particles in a form of at least one lithium silicate selected from the group consisting of $Li_2SiO_3$, $Li_4SiO_4$ and $Li_2Si_2O_5$, and the amorphous lithium silicate may have a complex form of $Li_aSi_bO_c$ ($2 \leq a \leq 4$, $0 < b \leq 2$, $2 \leq c \leq 5$). However, the present invention is not limited thereto.

In the exemplary embodiment of the present invention, Li included in the silicon-based active material may be included in an amount of 1 part by weight to 25 parts by weight on the basis of 100 parts by weight of a total of the silicon-based active material. Specifically, Li may be included in an amount of 3 parts by weight to 20 parts by weight, 5 parts by weight to 10 parts by weight, 6 parts by weight to 9 parts by weight, or 6 parts by weight to 8 parts by weight, and more specifically, 7 parts by weight to 8 parts by weight. As the Li content increases, the initial efficiency increases, but the discharge capacity decreases. Therefore, when the above range is satisfied, appropriate discharge capacity and initial efficiency can be implemented.

The content of the Li element can be confirmed through ICP analysis. Specifically, a predetermined amount (about 0.01 g) of a silicon-based active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of an element to be analyzed. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the element content of the manufactured silicon-based active material can be analyzed.

A carbon layer may be provided on at least a portion of the surface of the silicon-based particles according to the exemplary embodiment of the present invention. In this case, the carbon layer may be coated on at least a portion of the surface, i.e., may be partially coated on the surface of the particle, or may be coated on the entire surface of the particle. Conductivity is imparted to the silicon-based active material by the carbon layer, so that the initial efficiency, lifespan characteristics, and battery capacity characteristics of a secondary battery can be improved.

Specifically, the carbon layer may include crystalline carbon or amorphous carbon, and preferably may include amorphous carbon.

The crystalline carbon may further improve conductivity of the silicon-based active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one substance selected from the group consisting of tar, pitch, and other organic materials, or may be a carbon-based material formed by using a hydrocarbon as a source of chemical vapor deposition.

The carbide of the other organic materials may be an organic carbide selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, etc.

Specifically, the carbon layer may be formed by heat treatment after disposing a carbonaceous precursor on the silicon-based particles. The carbonaceous precursor may be graphene, graphite and the like for production of crystalline carbon, and may be a carbide of at least one selected from the group consisting of tar, pitch, and other organic materials for production of amorphous carbon, or a carbon-based material formed by using hydrocarbons such as methane, ethane, and acetylene as a source of chemical vapor deposition.

In the exemplary embodiment of the present invention, the carbon layer may be included in an amount of 1 part by weight to 20 parts by weight, 1 part by weight to 10 parts by weight, specifically 2 parts by weight to 5 parts by weight, and more specifically 3 parts by weight to 4 parts by weight on the basis of 100 parts by weight of the total of the silicon-based active material. When the above range is satisfied, reduction in capacity and efficiency of the silicon-based active material can be prevented.

An average particle diameter ($D_{50}$) of the silicon-based active material may be 0.1 um to 30 um, specifically 1 um to 20 $\mu$m, and more specifically 1 um to 15 um. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

The particle size of the silicon-based active material may be adjusted through a method such as a ball mill, a jet mill, or air classification, but the present invention is not limited thereto.

In the exemplary embodiment of the present invention, the negative electrode includes a negative electrode current collector; and a negative electrode active material layer provided on the negative electrode current collector, and the negative electrode active material layer includes a silicon-based active material.

In the exemplary embodiment of the present invention, one or more elements selected from the group consisting of aluminum, boron, zinc, and zirconium elements may be included in the negative electrode active material layer formed from the negative electrode slurry. In addition, the negative electrode active material layer may include a structure where the one or more elements selected from the group consisting of aluminum, boron, zinc, and zirconium elements are bound to oxygen.

The negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the negative electrode current collector. A thickness of the negative electrode current collector may be 6 um to 20 um. However, the thickness of the negative electrode current collector is not limited thereto.

In the exemplary embodiment of the present invention, the negative electrode active material layer may further include a binder and a conductive material.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powder; a conductive whisker such as zinc oxide and potassium titanate; a conductive metal oxide such as titanium oxide; a conductive material such as polyphenylene derivative, and the like may be used.

In the exemplary embodiment of the present invention, the negative electrode active material layer may further include a thickener. The thickener may be carboxymethylcellulose (CMC), but is not limited thereto, and thickeners used in the art may be appropriately employed.

In the exemplary embodiment of the present invention, the negative electrode active material layer may include an additional active material.

As the additional active material, a compound capable of reversible intercalation and deintercalation of lithium may be used. Specific examples include a carbonaceous material such as artificial graphite, natural graphite, graphitized carbon fiber, and amorphous carbon; a metallic compound capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as $SiO_\beta (0 < \beta < 2)$, $SnO_2$, vanadium oxide, lithium titanium oxide, and lithium vanadium oxide; or a composite including the metallic compound and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

In the exemplary embodiment of the present invention, the negative electrode active material layer may further include a carbon-based active material. Specifically, the carbon-based active material may be graphite.

In the exemplary embodiment of the present invention, a weight ratio of the silicon-based active material and the carbon-based active material (silicon-based active material: carbon-based active material) may be 1:99 to 30:70, and specifically 5:95 to 30:70 or 10:90 to 20:80.

An exemplary embodiment of the present invention provides a negative electrode slurry including a silicon-based active material, in which the silicon-based active material includes silicon-based particles including $SiOx$ ($0<x<2$) and Li, in which the negative electrode slurry includes 0.05 part by weight or more and 1.5 parts by weight or less of one or more elements selected from the group consisting of aluminum, boron, zinc and zirconium elements, on the basis of 100 parts by weight of a total of a solid content of the negative electrode slurry, and in which the negative electrode slurry includes a structure where one or more elements selected from the group consisting of aluminum, boron, zinc and zirconium elements are bound to oxygen.

The description of the above silicon-based active material may be applied to the silicon-based active material included in the negative electrode slurry.

The description of the above aluminum, boron, zinc, and zirconium elements may be applied to the aluminum, boron, zinc, and zirconium elements included in the negative electrode slurry.

In the exemplary embodiment of the present invention, the negative electrode slurry may include a hydroxide containing one or more elements selected from the group consisting of aluminum, boron, zinc, and zirconium elements. For example, the negative electrode slurry may include $Al(OH)_3$, $B(OH)_3$, $Zn(OH)_2$, $ZrO(OH)_2$ or the like.

In the exemplary embodiment of the present invention, the negative electrode slurry may include one or more selected from the group consisting of a lithium aluminum compound, a lithium boron compound, a lithium zinc compound, and a lithium zirconium compound. Specifically, the lithium aluminum compound, the lithium boron compound, the lithium zinc compound, and the lithium zirconium compound may be present in an oxide or hydroxide form, and may be formed as a result of a hydroxide containing one or more selected from the group consisting of aluminum, boron, zinc, and zirconium elements reacting with $OH^-$ or lithium by-products in the slurry. For example, the lithium aluminum compound and the lithium boron compound may be each present in a form of $LiAl_2(OH)_7 \cdot 2H_2O$, $B(OLi)_3$, and the like.

The negative electrode according to the exemplary embodiment of the present invention may be manufactured through a step of forming a negative electrode active material layer by applying the negative electrode slurry to at least one surface of a negative electrode current collector.

An exemplary embodiment of the present invention provides a method of manufacturing a negative electrode, the method including a step of forming a negative electrode slurry by mixing a silicon-based active material including silicon-based particles including $SiOx$ ($0<x<2$) and Li, a conductive material, a binder and an acid; and a step of forming a negative electrode active material layer by applying the negative electrode slurry to at least one surface of a negative electrode current collector, in which the acid is an acid including one or more elements selected from the group consisting of aluminum, boron, zinc and zirconium elements.

The method of manufacturing a negative electrode according to the exemplary embodiment of the present invention includes a step of forming a negative electrode slurry by mixing a silicon-based active material including silicon-based particles including $SiOx$ ($0<x<2$) and Li; a conductive material; a binder; and an acid including one or more elements selected from the group consisting of aluminum, boron, zinc and zirconium elements.

The silicon-based particles may be formed through a step of heating and vaporizing Si powders and $SiO_2$ powders, depositing the vaporized mixed gas to form preliminary particles; and a step of mixing and heat-treating the formed preliminary particles and Li powders.

A carbon layer may be provided on at least a portion of a surface of the silicon-based particles. The carbon layer may be formed by using chemical vapor deposition (CVD) using hydrocarbon gas or by carbonizing a material serving as a carbon source.

In the exemplary embodiment of the present invention, in the step of forming the negative electrode slurry, the negative electrode slurry may be formed through a process of mixing the silicon-based active material, the conductive material, and the binder and adding the acid to the mixture or mixing the silicon-based active material, the conductive material, the binder and the acid together.

In general, when doping silicon-based particles with Li, a method of coating carbon on the silicon-based particles and then doping the coated silicon-based particles by heat-treating lithium powders is used. In this case, there is an advantage of increasing the initial efficiency, but damage to the carbon layer occurs due to lithium doping after carbon coating, and lithium by-products that do not react with the silicon-based particles remain. Therefore, during the manufacturing of the aqueous slurry, the slurry becomes basic due to the lithium by-products remaining unreacted with the silicon-based particles, and Si of the negative electrode active material and the base ($OH^-$) react to generate a gas and to change rheological properties.

In order to solve this problem, in the present invention, in the process of manufacturing the negative electrode slurry, an acid including one or more elements selected from the group consisting of aluminum, boron, zinc, and zirconium elements is added so that a base ($OH^-$) in the slurry preferentially reacts with the acid before reacting with Si and the OH on the Si surface reacts with the acid to prevent access of the base to Si. Therefore, the reaction between Si and the base in the slurry is suppressed, so that the rheological properties of the slurry and the gas generation are suppressed and the change in viscosity of the slurry is reduced. In addition, since the added acid reacts with the base, there is no damage to other materials such as CMC (carboxy methyl cellulose) binder due to acidity.

Accordingly, a secondary battery including a negative electrode manufactured according to the above-described method has effects of improving the discharge capacity, initial efficiency, resistance performance and/or lifespan characteristics of the battery.

In the exemplary embodiment of the present invention, the acid including one or more elements selected from the group consisting of aluminum, boron, zinc and zirconium elements may be one or more selected from the group consisting of $Al(OH)_3$, $B(OH)_3$, $Zn(OH)_2$ and $ZrO(OH)_2$. When using the above acid, $Al(OH)_3$, $B(OH)_3$, $Zn(OH)_2$ or $ZrO(OH)_2$ reacts with a base in the slurry or reacts with OH on the Si surface to hinder access of the base to Si, thereby suppressing changes in the rheological properties of the slurry and suppressing gas generation. On the other hand, if a strong acid other than the acid described above is used, the strong acid causes rapid elution of lithium from the active material to damage the structure of the active material, and reacts with a binder such as CMC to continuously change the viscosity.

In the exemplary embodiment of the present invention, the acid including one or more elements selected from the group consisting of aluminum, boron, zinc, and zirconium elements may be mixed in an amount of 0.1 part by weight or more and 5 parts by weight or less on the basis of 100 parts by weight of the total of the solid content of the negative electrode slurry. Specifically, the acid may be mixed in an amount of 0.1 part by weight or more and 4 parts by weight or less, and more specifically, 0.1 part by weight or more and 3 parts by weight or less, or 0.1 part by weight or more and 2 parts by weight or less. The lower limit of the content of the acid may be 0.1 part by weight, 0.3 part by weight, 0.5 part by weight, 0.7 part by weight or 0.8 part by weight, and the upper limit of the content may be 5 parts by weight, 4 parts by weight, 3 parts by weight or 2 parts by weight.

When the above range of the acid is satisfied, the rheological properties of the negative electrode slurry and the gas generation are appropriately suppressed to form a stable negative electrode, and the secondary battery including the negative electrode has effects of improving the discharge capacity, initial efficiency, resistance performance and/or life characteristics of the battery. On the other hand, if the content is less than the above range, there is a problem in that gas is generated because a sufficient source capable of reacting with the base is not provided. If the acid is added in excess of the above range, the capacity of the negative electrode decreases and the acid acts as a resistor that hinders the diffusion of lithium ions.

In the exemplary embodiment of the present invention, the negative electrode slurry includes one or more elements selected from the group consisting of aluminum, boron, zinc and zirconium elements.

The above descriptions can be applied to the aluminum, boron, zinc and zirconium elements.

In the exemplary embodiment of the present specification, the process of mixing the negative electrode slurry may appropriately employ a method known in the art.

In the exemplary embodiment of the present specification, pH of the negative electrode slurry at 25°C may be 10 to 13, specifically 11 to 12.5, and more specifically 12 to 12.5. When pH of the negative electrode slurry satisfies the above range, the elution of Li in the active material can be prevented. On the other hand, if pH of the negative electrode slurry is less than 10, there is a problem in that the structure of the active material is collapsed due to elution of Li from the inside of the active material. If pH of the negative electrode slurry exceeds 13, due to too strong base, Si of the active material reacts with the base to accelerate gas generation.

In the exemplary embodiment of the present invention, the negative electrode slurry may include an additional active material. The above description may be applied to the additional active material.

In the exemplary embodiment of the present invention, the negative electrode slurry may further include a carbon-based active material. Specifically, the carbon-based active material may be graphite.

In the exemplary embodiment of the present invention, a weight ratio of the silicon-based active material and the carbon-based active material (silicon-based active material: carbon-based active material) may be 1:99 to 30:70, and specifically 5:95 to 30:70 or 10:90 to 20:80.

In the exemplary embodiment of the present invention, the negative electrode slurry may further include a thickener. The thickener may be carboxymethylcellulose (CMC), but is not limited thereto, and thickeners used in the art may be appropriately employed.

In the exemplary embodiment of the present invention, the total negative electrode active material including the silicon-based active material and the carbon-based active material may be included in an amount of 60 parts by weight to 99 parts by weight, and specifically 70 parts by weight to 98 parts by weight in the negative electrode slurry, on the basis of 100 parts by weight of a total of the solid content of the negative electrode slurry.

In the exemplary embodiment of the present invention, the binder may be included in an amount of 0.5 part by weight to 30 parts by weight, and specifically 1 part by weight to 20 parts by weight in the negative electrode slurry, on the basis of 100 parts by weight of the total of the solid content of the negative electrode slurry.

In the exemplary embodiment of the present invention, the conductive material may be included in an amount of 0.5 part by weight to 25 parts by weight, specifically 1 part by weight to 20 parts by weight in the negative electrode slurry, on the basis of 100 parts by weight of the total of the solid content of the negative electrode slurry.

In the exemplary embodiment of the present invention, the thickener may be included in an amount of 0.5 part by weight to 25 parts by weight, specifically 0.5 part by weight to 20 parts by weight, and more specifically 1 part by weight to 20 parts by weight in the negative electrode slurry, on the basis of 100 parts by weight of the total of the solid content of the negative electrode slurry.

The negative electrode slurry according to the exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In the exemplary embodiment of the present invention, a weight of the solid content of the negative electrode slurry may be 20 parts by weight to 75 parts by weight, and specifically 30 parts by weight to 70 parts by weight on the basis of 100 parts by weight of the total of the negative electrode slurry.

A method of manufacturing a negative electrode according to the exemplary embodiment of the present invention includes a step of forming a negative electrode active material layer by applying a negative electrode slurry to at least one surface of a negative electrode current collector.

The method of manufacturing a negative electrode according to the exemplary embodiment of the present invention includes a step of applying the negative electrode slurry to at least one surface of the negative electrode current collector, and then drying and roll-pressing the negative electrode current collector.

The negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the negative electrode current collector. A thickness of the negative electrode current collector may be 6 um to 20 um. However, the thickness of the negative electrode current collector is not limited thereto.

A method of applying the negative electrode slurry is not particularly limited as long as it is a method commonly used in the art. For example, a coating method using a slot die may be used, and additionally, a Mayer bar coating method, a gravure coating method, a dip coating method, a spray coating method, and the like may be used.

The drying step may be performed by appropriately adopting a method commonly used in the art.

The roll-pressing step may be performed by appropriately adopting a method commonly used in the art.

A secondary battery according to the exemplary embodiment of the present invention may include the negative electrode according to the exemplary embodiment of the present invention described above. Specifically, the secondary battery may include a negative electrode, a positive electrode, a separator interposed between the positive electrode and the negative electrode, and an electrolyte solution and, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_3$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.5$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or greater layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrrolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution and having high electric conductivity may be prepared, and therefore, such a combined use may be more preferably used.

A lithium salt may be used as the metal salt, and the lithium salt is a material that is readily soluble in the non-aqueous electrolyte solution, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving lifetime characteristics of the battery, suppressing a decrease in battery capacity, improving discharge capacity of the battery, and the like, in addition to the above-described electrolyte solution components.

Another exemplary embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

<Examples and Comparative Examples>

Example 1

94g of powders of Si and $SiO_2$ mixed in a molar ratio of 1:1 were mixed in a reactor and vacuum-heated to a sublimation temperature of 1,400°C. Then, a mixed gas of vaporized Si and $SiO_2$ was reacted in a cooling zone in a vacuum state where a cooling temperature was 800°C, and condensed into a solid phase. The preliminary silicon-based active material was pulverized using a ball mill for 3 hours to manufacture silicon-based particles having a size of 6 um. Thereafter, the silicon-based particles were positioned in a hot zone of a CVD apparatus while maintaining an inert gas atmosphere by causing Ar gas to flow, and a reaction was carried out at $10^{-1}$ torr for 5 hours while blowing methane into a hot zone of 900°C by using Ar as carrier gas, thereby forming a carbon layer on the surface of the silicon-based particles. Subsequently, 8 g of Li metal powders were added and additional heat treatment was conducted at the temperature of 800°C in an inert atmosphere, thereby manufacturing a silicon-based active material.

A mixture in which the silicon-based active material manufactured as described above and graphite (average particle diameter ($D_{50}$): 20 $\mu$m) serving as a carbon-based active material were mixed in a weight ratio of 15:85 was used as a negative electrode active material.

The negative electrode active material, styrene-butadiene rubber (SBR) serving as a binder, Super C65 serving as a conductive material, carboxymethylcellulose (CMC) serving as a thickener, and $Al(OH)_3$ serving as an acid were mixed in a weight ratio of 95:2:1:1:1, and the resulting mixture was then added to distilled water serving as a solvent for negative electrode slurry formation to manufacture a negative electrode slurry. As a result of XRD analysis of the negative electrode slurry (product name: D4-endavor, manufacturer: Bruker), $Al(OH)_3$ and $LiAl_2(OH)_7 \cdot 2H_2O$ in the slurry were detected.

The negative electrode slurry was coated on one surface of a copper current collector (thickness: 15 $\mu$m) serving as a negative electrode current collector in a loading amount of 3.6 mAh/cm$^2$, which was then roll-pressed, and dried in a vacuum oven at 130°C for 10 hours to form a negative electrode active material layer (thickness: 50 $\mu$m), so that a negative electrode was manufactured (thickness of negative electrode: 65 $\mu$m).

Example 2

A negative electrode was manufactured in the same method as in Example 1, except that $B(OH)_3$ was used as the acid. As a result of XRD analysis of the negative electrode slurry, $B(OH)_3$ and $B(OLi)_3$ in the slurry were detected.

Example 3

A negative electrode was manufactured in the same method as in Example 1, except that $Zn(OH)_2$ was used as the acid. As a result of XRD analysis of the negative electrode slurry, $Zn(OH)_2$ and lithium zinc compounds in the slurry were detected.

Example 4

A negative electrode was manufactured in the same method as in Example 1, except that $ZrO(OH)_2$ was used as the acid. As a result of XRD analysis of the negative electrode slurry, $ZrO(OH)_2$ and lithium zirconium compounds in the slurry were detected.

Example 5

A negative electrode was manufactured in the same method as in Example 1, except that the negative electrode active material, styrene-butadiene rubber (SBR) serving as a binder, Super C65 as a conductive material, carboxymethyl cellulose (CMC) serving as a thickener, and $Al(OH)_3$ serving as an acid were mixed in a weight ratio of 93:2:1:1:3.

Comparative Example 1

A negative electrode active material was manufactured in the same method as in Example 1, except that the negative electrode active material, styrene-butadiene rubber (SBR) serving as a binder, Super C65 serving as a conductive material, and carboxymethylcellulose (CMC) serving as a thickener were mixed in a weight ratio of 96:2:1:1.

## Comparative Example 2

A negative electrode was manufactured in the same method as in Example 1, except that the negative electrode active material, styrene-butadiene rubber (SBR) serving as a binder, Super C65 serving as a conductive material, carboxymethylcellulose (CMC) serving as a thickener, and $Al(OH)_3$ serving as an acid were mixed in a weight ratio of 95.95:2:1:1:0.05.

## Comparative Example 3

A negative electrode was manufactured in the same method as in Example 1, except that the negative electrode material, styrene-butadiene rubber (SBR) serving as a binder, Super C65 serving as a conductive material, carboxymethyl cellulose (CMC) serving as a thickener, and $Al(OH)_3$ serving as an additive were mixed in a weight ratio of 90:2:1:1:6.

The compositions of the negative electrode slurries and negative electrodes manufactured in Examples and Comparative Examples are shown in Table 1.

[Table 1]

| | amount of acid added (on the basis of 100 parts by weight of the negative electrode active material layer) | whether Al, B, Zn and Zr are detected | whether bound to oxygen | element contents of Al, B, Zn and Zr (on the basis of 100 parts by weight of the negative electrode active material layer) | amount of gas generation when slurry was stored at 60°C (slurry 20g, based on 3 days) (ml) |
|---|---|---|---|---|---|
| Example 1 | 1 | O(Al) | O | 0.35 | 2 |
| Example 2 | 1 | O(B) | O | 0.18 | 2 |
| Example 3 | 1 | O(Zn) | O | 0.66 | 2 |
| Example 4 | 1 | O(Zr) | O | 0.57 | 2 |
| Example 5 | 3 | O(Al) | O | 0.92 | 1 |
| Comparative Example 1 | 0 | X | X | - | 150 |
| Comparative Example 2 | 0.05 | O(Al) | O | 0.02 | 80 |
| Comparative Example 3 | 6 | O (Al) | O | 1.85 | 1 |

ICP analysis (measurement of element content)

The contents of Al, B, Zn, and Zr elements included in the negative electrodes were confirmed through ICP analysis, and specifically, ICP analysis was performed using an inductively coupled plasma atomic emission spectrometer (ICPAES, Perkin-Elmer 7300).

## XPS Analysis (whether bound to oxygen)

The presence or absence of the B-O, Al-O, Zn-O and Zr-O bonds was confirmed by XPS (Nexsa ESCA System, Thermo Fisher Scientific (NEXSA 1)) analysis to determine whether peaks were detected in the binding energy range of each element with oxygen.

## Measurement of Amount of Gas Generation

The negative electrode slurries manufactured in Examples and Comparative Examples were put into aluminum pouches each having a volume of 7 mL and sealed.

A difference in weight of the aluminum pouch having the negative electrode slurry contained therein in air and in water at 23°C was obtained, and the difference was divided by the density of water at 23°C to measure a volume of gas immediately after the negative electrode slurry was manufactured.

Next, after the aluminum pouch having the negative electrode slurry contained therein was stored at 60°C for 3 days, a difference in weight of the aluminum pouch having the negative electrode slurry contained therein in air and in water at 60°C was obtained, and the difference was divided by the density of water at 60°C to measure a volume of gas after the negative electrode slurry was stored for 3 days.

A difference between the volume of gas measured after the negative electrode slurry was stored for 3 days and the volume of gas measured immediately after the negative electrode slurry was manufactured is defined as an amount of gas generation and is shown in Table 1.

**<Experimental Example: Evaluation of Discharge Capacity, Initial Efficiency, and Lifespan (Capacity Retention) Characteristics>**

A lithium (Li) metal thin film obtained by cutting into a circular shape of 1.7671 $cm^2$ was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving $LiPF_6$ to a concentration of 1M was injected to manufacture a lithium coin half-cell.

The prepared batteries were charged and discharged to evaluate discharge capacity, initial efficiency, and capacity retention, which are shown in Table 2.

The charge and discharge were performed at 0.1C for the first cycle and the second cycle, and the charge and discharge were performed at 0.5C from the third cycle. At the 300th cycle, the charge and discharge were terminated in a charge state (a state in which lithium ions were put in the negative electrode).

Charge conditions: CC (constant current)/CV (constant voltage) (5 mV/0.005C current cut-off)
Discharge conditions: CC (constant current) condition 1.5 V

The discharge capacity (mAh/g) and the initial efficiency (%) were derived from the result after charging and discharging once. Specifically, the initial efficiency (%) was derived by the following calculation.

$$\text{Initial efficiency (\%) = (discharge capacity after 1}^{st} \text{ discharge/1}^{st} \text{ charge capacity)} \times 100$$

The capacity retention was derived by the following calculation.

$$\text{Capacity retention (\%) = (299}^{th} \text{ discharge capacity/1}^{st} \text{ discharge capacity)} \times 100$$

[Table 2]

| Battery | Discharge capacity (mAh/g) | Initial efficiency (%) | Capacity retention (%) |
|---|---|---|---|
| Example 1 | 500 | 92.1 | 91.8 |
| Example 2 | 500 | 92.3 | 91.3 |
| Example 3 | 500 | 92.1 | 91.1 |
| Example 4 | 500 | 92.0 | 91.5 |
| Example 5 | 500 | 92.1 | 90.3 |
| Comparative Example 1 | 480 | 89.5 | 82.1 |
| Comparative Example 2 | 490 | 90.1 | 86.5 |
| Comparative Example 3 | 495 | 91.2 | 84.5 |

Referring to Table 2, it can be seen that in the negative electrodes of Examples 1 to 5, the negative electrode includes Al, B, Zn or Zr in an amount of 0.05 part by weight to 1.5 parts by weight on the basis of the solid content of the negative electrode slurry (negative electrode active material layer) and has the structure where the elements are each bound to oxygen, and therefore, the discharge capacity, the initial efficiency, and the capacity retention are all excellent.

On the other hand, in Comparative Examples 1 and 2 in which no acid was added or only a small amount of acid was added during the manufacturing of the negative electrode, and therefore, no Al was present or a small amount of Al was present in the negative electrode, it can be seen that the discharge capacity, the initial efficiency and the capacity retention are greatly reduced. In addition, in Comparative Examples 1 and 2 in which no acid was added or only a small amount of acid was added during the manufacturing of the negative electrode, and therefore, the base in the negative electrode slurry was not properly neutralized and reacted with Si of the negative electrode active material, it can be seen that the amount of gas generation in the slurry is 40 times or more.

Further, in Comparative Example 3 in which the excessive amount of acid was added during the manufacturing of the negative electrode, and therefore, an excess amount of Al was included in the negative electrode, it can be seen that the capacity of the negative electrode decreases due to the excessive amount of Al, and the excessive amount of Al acts as a resistor that hinders the diffusion of lithium ions, so that the discharge capacity, initial efficiency and capacity retention of the battery are reduced.

**Claims**

1. A negative electrode comprising:

   a negative electrode current collector; and
   a negative electrode active material layer provided on the negative electrode current collector,
   wherein the negative electrode active material layer comprises a silicon-based active material,
   wherein the silicon-based active material comprises silicon-based particles comprising $SiO_x$ (0<x<2) and Li,
   wherein the negative electrode comprises 0.05 part by weight or more and 1.5 parts by weight or less of one or more elements selected from the group consisting of aluminum, boron, zinc and zirconium elements, on the basis of 100 parts by weight of a total of the negative electrode active material layer, and
   wherein the negative electrode comprises a structure where the one or more elements selected from the group consisting of aluminum, boron, zinc and zirconium elements are bound to oxygen.

2. The negative electrode of claim 1, wherein the one or more elements selected from the group consisting of aluminum, boron, zinc, and zirconium elements are included in an amount of 0.1 part by weight to 1 part by weight on the basis of 100 parts by weight of the total of the negative electrode active material layer.

3. The negative electrode of claim 1, wherein the structure where the one or more elements selected from the group consisting of aluminum, boron, zinc and zirconium elements are bound to oxygen is a hydroxide containing one or more elements selected from the group consisting of aluminum, boron, zinc and zirconium elements.

4. The negative electrode of claim 1, wherein the structure where the one or more elements selected from the group consisting of aluminum, boron, zinc and zirconium elements are bound to oxygen is a lithium aluminum compound, a lithium boron compound, a lithium zinc compound or a lithium zirconium compound.

5. The negative electrode of claim 1, wherein Li included in the silicon-based active material is included in an amount of 5 parts by weight to 10 parts by weight on the basis of 100 parts by weight of a total of the silicon-based active material.

6. The negative electrode of claim 1, wherein the silicon-based active material further comprises a carbon layer provided on at least a portion of the silicon-based particles.

7. The negative electrode of claim 1, wherein the negative electrode active material layer further comprises a carbon-based active material.

8. The negative electrode of claim 7, wherein a weight ratio (silicon-based active material: carbon-based active material) of the silicon-based active material and the carbon-based active material is 1:99 to 30:70.

9. A method of manufacturing a negative electrode, the method comprising:

forming a negative electrode slurry by mixing a silicon-based active material comprising silicon-based particles comprising $SiO_x$ (0<x<2) and Li, a conductive material, a binder and an acid; and
forming a negative electrode active material layer by applying the negative electrode slurry to at least one surface of a negative electrode current collector,
wherein the acid is an acid comprising one or more elements selected from the group consisting of aluminum, boron, zinc and zirconium elements.

10. The method of claim 9, wherein the acid comprising one or more elements selected from the group consisting of aluminum, boron, zinc and zirconium elements is mixed in an amount of 0.1 part by weight or more and 5 parts by weight or less on the basis of 100 parts by weight of a total of a solid content of the negative electrode slurry.

11. The method of claim 9, wherein the acid comprising one or more elements selected from the group consisting of aluminum, boron, zinc and zirconium elements comprises one or more selected from the group consisting of $Al(OH)_3$, $B(OH)_3$, $Zn(OH)_2$ and $ZrO(OH)_2$.

12. The method of claim 9, wherein the negative electrode slurry further comprises a carbon-based active material.

13. The method of claim 9, wherein the negative electrode slurry comprises one or more elements selected from the group consisting of aluminum, boron, zinc and zirconium elements.

14. A secondary battery comprising the negative electrode of any one of claims 1 to 8.

15. A negative electrode slurry comprising a silicon-based active material,

wherein the silicon-based active material comprises silicon-based particles comprising $SiO_x$ (0<x<2) and Li,
wherein the negative electrode slurry comprises 0.05 part by weight or more and 1.5 parts by weight or less of one or more elements selected from the group consisting of aluminum, boron, zinc and zirconium elements, on the basis of 100 parts by weight of a total of a solid content of the negative electrode slurry, and
wherein the negative electrode slurry comprises a structure where the one or more elements selected from the group consisting of aluminum, boron, zinc and zirconium elements are bound to oxygen.

**INTERNATIONAL SEARCH REPORT**

| International application No. |
| --- |
| **PCT/KR2022/020017** |

### A. CLASSIFICATION OF SUBJECT MATTER

**H01M 4/131**(2010.01)i; **H01M 4/136**(2010.01)i; **H01M 4/36**(2006.01)i; **H01M 4/38**(2006.01)i; **H01M 4/58**(2010.01)i; **H01M 4/62**(2006.01)i; **H01M 4/587**(2010.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/131(2010.01); C01B 32/05(2017.01); H01M 10/052(2010.01); H01M 10/0525(2010.01); H01M 10/42(2006.01); H01M 4/13(2010.01); H01M 4/48(2010.01); H01M 50/572(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 음극(anode), 활물질(active material), 실리콘(silicon), 리튬(Lithium), 알루미늄(aluminium), 붕소(boron), 아연(zinc), 지르코늄(zirconium)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2018-0019569 A (SHIN-ETSU CHEMICAL CO., LTD.) 26 February 2018 (2018-02-26) See claims 1-2 and 11-12; paragraphs [0046], [0050], [0056], [0078], [0095]-[0096] and [0136]; and figure 1. | 1-3,5-8,14 |
| A | | 4,9-13,15 |
| A | KR 10-2021-0004580 A (HYUNDAI MOTOR COMPANY et al.) 13 January 2021 (2021-01-13) See entire document. | 1-15 |
| A | KR 10-2015-0020022 A (SAMSUNG SDI CO., LTD.) 25 February 2015 (2015-02-25) See entire document. | 1-15 |
| A | KR 10-2002-0036284 A (SAMSUNG SDI CO., LTD.) 16 May 2002 (2002-05-16) See entire document. | 1-15 |

☑ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **30 March 2023** | **31 March 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/020017**

## C. DOCUMENTS CONSIDERED TO BE RELEVANT

| Category* | Citation of document, with indication, where appropriate, of the relevant passages | Relevant to claim No. |
|---|---|---|
| A | KR 10-1762477 B1 (LG CHEM, LTD.) 27 July 2017 (2017-07-27)<br>See entire document. | 1-15 |

**INTERNATIONAL SEARCH REPORT**
**Information on patent family members**

International application No.

**PCT/KR2022/020017**

| Patent document cited in search report | | | Publication date (day/month/year) | Patent family member(s) | | | Publication date (day/month/year) |
|---|---|---|---|---|---|---|---|
| KR | 10-2018-0019569 | A | 26 February 2018 | CN | 107710466 | A | 16 February 2018 |
| | | | | CN | 107710466 | B | 03 November 2020 |
| | | | | EP | 3312916 | A1 | 25 April 2018 |
| | | | | JP | 2017-010645 | A | 12 January 2017 |
| | | | | JP | 6407804 | B2 | 17 October 2018 |
| | | | | TW | 201717457 | A | 16 May 2017 |
| | | | | TW | I709273 | B | 01 November 2020 |
| | | | | US | 10418627 | B2 | 17 September 2019 |
| | | | | US | 2018-0175377 | A1 | 21 June 2018 |
| | | | | WO | 2016-203696 | A1 | 22 December 2016 |
| KR | 10-2021-0004580 | A | 13 January 2021 | None | | | |
| KR | 10-2015-0020022 | A | 25 February 2015 | CN | 104377342 | A | 25 February 2015 |
| | | | | CN | 104377342 | B | 19 November 2019 |
| | | | | EP | 2838142 | A1 | 18 February 2015 |
| | | | | EP | 2838142 | B1 | 24 April 2019 |
| | | | | JP | 2015-037077 | A | 23 February 2015 |
| | | | | JP | 6388432 | B2 | 12 September 2018 |
| | | | | KR | 10-2258082 | B1 | 27 May 2021 |
| | | | | US | 10381690 | B2 | 13 August 2019 |
| | | | | US | 2015-0050533 | A1 | 19 February 2015 |
| | | | | US | 2019-0341656 | A1 | 07 November 2019 |
| KR | 10-2002-0036284 | A | 16 May 2002 | KR | 10-0378012 | B1 | 29 March 2003 |
| KR | 10-1762477 | B1 | 27 July 2017 | KR | 10-2016-0014365 | A | 11 February 2016 |

Form PCT/ISA/210 (patent family annex) (July 2022)

**REFERENCES CITED IN THE DESCRIPTION**

**Patent documents cited in the description**

- KR 1020210176771

- KR 1020170048211